# EUROPEAN PATENT APPLICATION

(11) **EP 4 571 478 A1**
(43) Date of publication of application: **18.06.2025**
(21) Application number: 24793723.8
(22) Date of filing: 07.10.2024
(51) Int. Cl.: G06F 3/04886, G06F 3/04817, G06F 3/041, G06F 3/0484

(54) **ELECTRONIC DEVICE AND METHOD FOR PROVIDING SCREEN KEYBOARD USING ELECTRONIC DEVICE**

(30) Priority: 12.10.2023 KR 20230135781; 28.11.2023 KR 20230168584
(71) Applicant: Samsung Electronics Co., Ltd, Suwon-si, Gyeonggi-do 16677 (KR)
(72) Inventor: LEE, Eunsung, Suwon-si, Gyeonggi-do 16677 (KR); AN, Jinwan, Suwon-si, Gyeonggi-do 16677 (KR); KIM, Seonghun, Suwon-si, Gyeonggi-do 16677 (KR)
(74) Representative: Nederlandsch Octrooibureau
(86) International application number: PCT/KR2024/015218
(87) International publication number: WO 2025/079942

(57) **Abstract**

An electronic device may include a display to display a screen keyboard, a sensor, a processor, and a memory configured to store instructions, wherein the screen keyboard may include a first portion in which a character is displayed and a second portion in which a number is displayed. The instructions, when executed by the processor, may cause the electronic device to determine that there is an abnormality in a state of holding the electronic device, based on satisfaction of a specified condition, and differently determine positions and areas of the first portion and the second portion to be displayed on the display.

## Description

### [Technical Field]

The disclosure relates to an electronic device and, more particularly, to an electronic device for displaying a screen keyboard on a display.

### [Background Art]

In an electronic device including a smartphone, a screen keyboard (or virtual keyboard) may be displayed on a display and serve as an input system. The screen keyboard may be used when a user inputs content including, for example, text or an emoticon. The electronic device may transmit a user input to a running application, based on an input from the screen keyboard. The screen keyboard is generally disposed in a lower portion of a smartphone screen, and may be displayed only in a small area with a certain size or smaller. The electronic device may display the content of the application being used and data being input in an upper area of the screen, thereby providing a function such that the user may identify the content of the original application being used in addition to the screen keyboard.

### [Disclosure of Invention]

The disclosure relates to manipulation of an on-screen keyboard (functioning to input text or the like through a screen touch, hereinafter, "screen keyboard"), which is a soft input method used by an electronic device including a smartphone to input data, such as text or emoticons.

The smaller the screen area occupied by the screen keyboard is, the more content an application being used is able to display. The electronic device may provide a more comfortable and convenient situation for a user using an application by adjusting the display area of the screen keyboard to be relatively small. However, when the display area of the screen keyboard is reduced, the size of each button is reduced, making it difficult to accurately press a button with a finger. In this case, the rate of typing errors of a user may increase, which may deteriorate user experience.

An electronic device and a method in which an electronic device provides a virtual keyboard according to the disclosure may overcome restrictions of inconvenience in usability due to a small area of a display screen of an application or inconvenience in keyboard input due to a small area of a display screen of a screen keyboard.

An electronic device may include a display to display a screen keyboard, a sensor, a processor, and a memory configured to store instructions, wherein the screen keyboard may include a first portion in which a character is displayed and a second portion in which a number is displayed. The instructions, when executed by the processor, may cause the electronic device to determine that there is an abnormality in a state of holding the electronic device, based on satisfaction of a specified condition, and differently determine positions and areas of the first portion and the second portion to be displayed on the display.

A method in which an electronic device displays a screen keyboard may include determining that there is an abnormality in a state of holding the electronic device, based on satisfaction of a specified condition and differently determining positions and areas of a first portion, in which a character is displayed, and a second portion, in which a number is displayed, to be displayed on the display.

A recording medium storing instructions which cause the computer to carry out a screen keyboard display method. At least one processor in an electronic device may function like the computer to perform the instructions. Therefore, the electronic device may include the at least one processor and a memory configured to store the instructions. A screen keyboard displayed in a display of the electronic device may include a first portion in which a character is displayed and a second portion in which a number is displayed. The instructions, when executed by the processor, may cause the electronic device to determine that there is an abnormality in a state of holding the electronic device, based on satisfaction of a specified condition, and differently determine positions and areas of the first portion and the second portion to be displayed on the display.

An electronic device and a method in which an electronic device provides a screen keyboard according to the disclosure may adjust a display screen of an application and a display screen of a screen keyboard according to a situation, thereby providing convenient user experience in keyboard input.

In particular, an electronic device and a method in which an electronic device provides a screen keyboard according to the disclosure may solve occurrence of an error in a user input process or a decrease in input speed due to poor keyboard manipulation.

An electronic device according to the disclosure may notify a user that a state of holding the electronic device or a state of manipulating a screen keyboard is unstable by using a notification. The electronic device according to the disclosure may propose changing the layout of the keyboard when the holding state or the state of manipulating the screen keyboard is unstable, thereby improving user experience.

### [Brief Description of Drawings]

FIG. 1 illustrates a block diagram of an electronic device in a network environment according to various embodiments;
FIG. 2 illustrates a situation in which an execution screen of an application and a screen keyboard are displayed on an electronic device according to a comparative example;
FIG. 3A and FIG. 3B illustrate a form in which an electronic device is supported by a hand according to a position where a screen keyboard is displayed when the electronic device is held, and illustrate a portion where force is applied to press a button on a screen;
FIG. 4 illustrates a block diagram of an electronic device according to various embodiments;
FIG. 5 illustrates a reference line for detecting a situation in which an electronic device shakes and the direction of movement of the electronic device;
FIG. 6A illustrates an example of adjusting the position and area of a screen keyboard when an abnormality in a state of holding an electronic device is detected according to various embodiments;
FIG. 6B illustrates an example of displaying a notification of the position and area of a screen keyboard when an abnormality in a state of holding an electronic device is detected;
FIG. 7A illustrates the configuration of a screen keyboard on an electronic device according to various embodiments;
FIG. 7B and FIG. 7C illustrate an example of differently displaying a screen keyboard by changing the position and area of each component of the screen keyboard when an abnormality in a state of holding an electronic device is detected according to various embodiments;
FIG. 8 illustrates a flowchart of a screen keyboard display method of an electronic device according to various embodiments; and
FIG. 9A and FIG. 9B illustrate flowcharts illustrating each operation of a screen keyboard display method of an electronic device according to various embodiments.

### [Mode for the Invention]

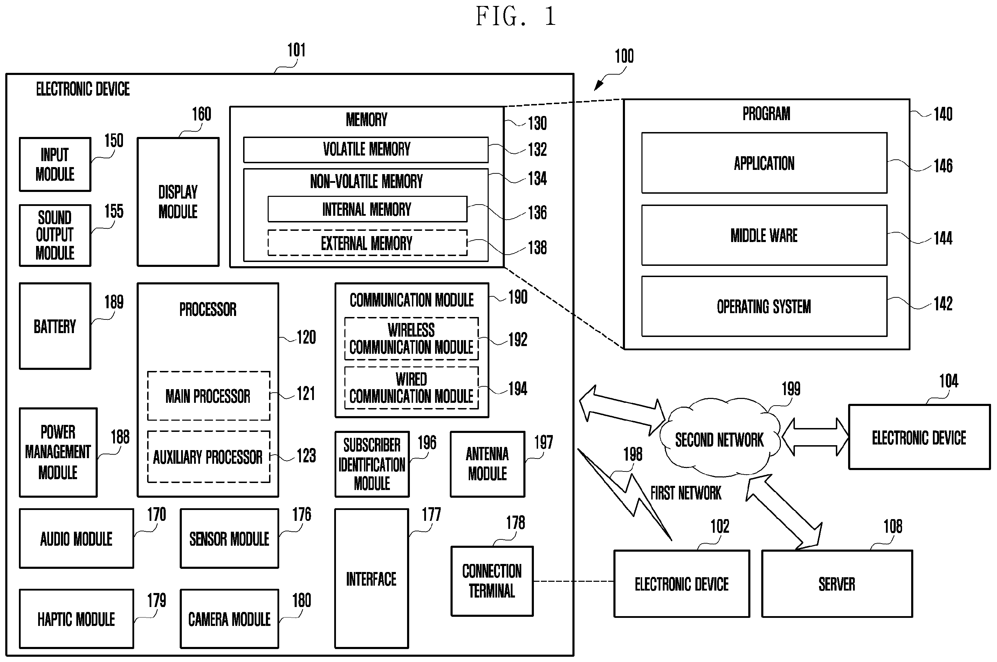

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

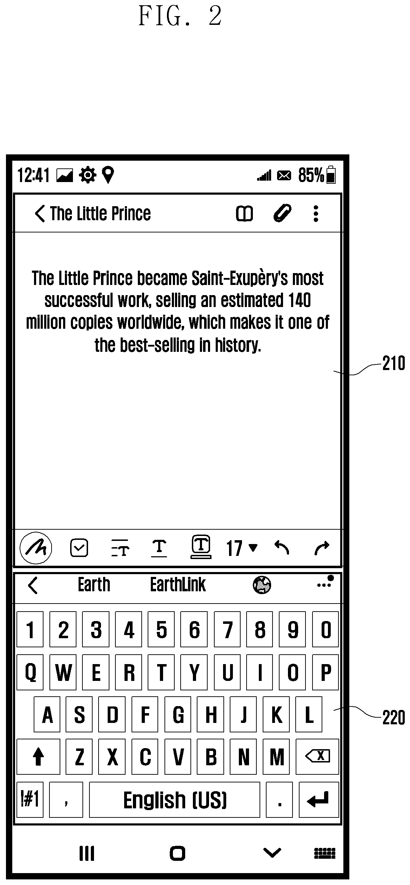

FIG. 2 illustrates a situation in which an application execution screen and a screen keyboard are displayed on an electronic device according to a comparative example.

Referring to FIG. 2, when an application is executed, the electronic device may display the application execution screen 210 and the screen keyboard 220 together on a display.

As an area occupied by the screen keyboard 220 decreases, the area of the application execution screen 210 may relatively increase. However, as the area occupied by the screen keyboard 220 decreases, the area occupied by each button (e.g., q, w, e, and r) on the screen keyboard 220 may relatively decrease. When the area of each button on the screen keyboard 220 decreases, it may be difficult for a user to accurately perform input with a finger.

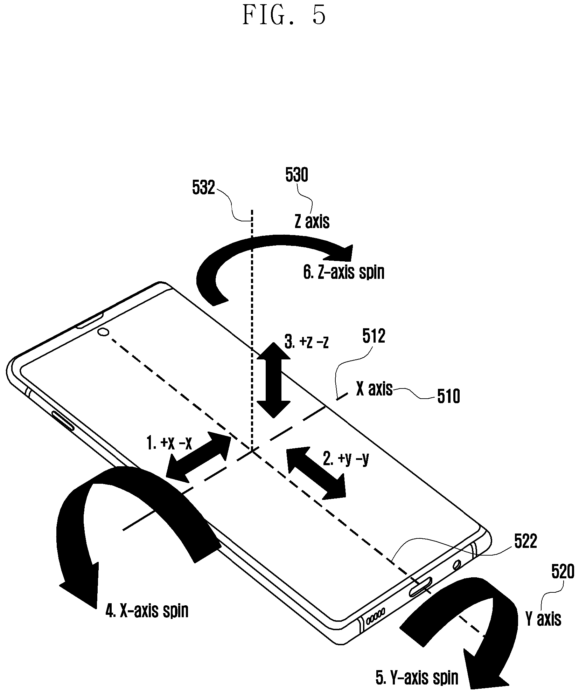

As the area of the application execution screen 210 increases, the screen keyboard 220 may be positioned relatively lower on the display, based on a y-axis. The y-axis may be disposed in a vertical direction, based on the center of the electronic device, and an axial direction will be described in detail with reference to FIG. 5. As the screen keyboard 220 is positioned relatively lower on the display, based on the y-axis, a portion held by the user may also be positioned relatively lower. In addition, a portion where the user makes a touch and applies force for input on the keyboard may also be positioned relatively lower. As the center of gravity of the electronic device becomes distant from the position of an area where force is applied for a user input, it may be difficult to stably hold the electronic device. In this case, shaking of the electronic device may relatively increase while the user presses a button, the rate of typing errors may increase, and input speed may relatively decrease.

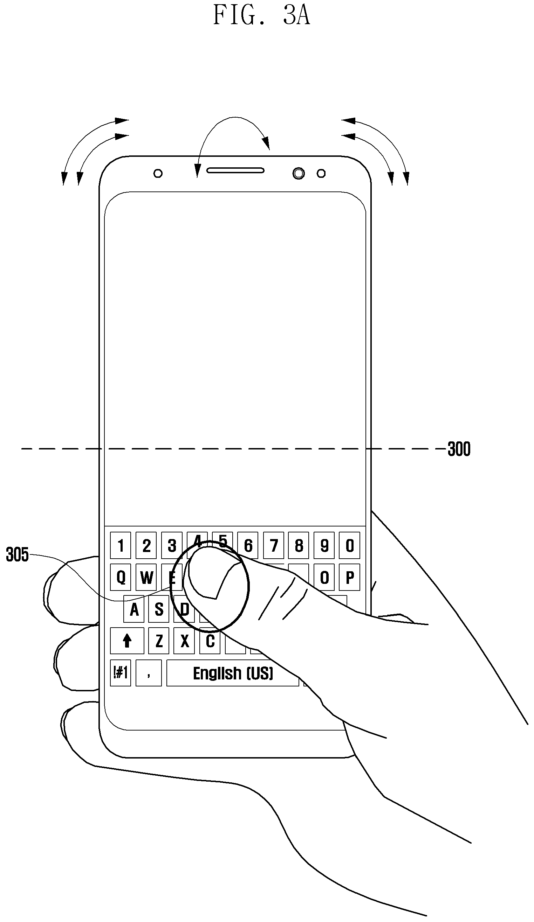

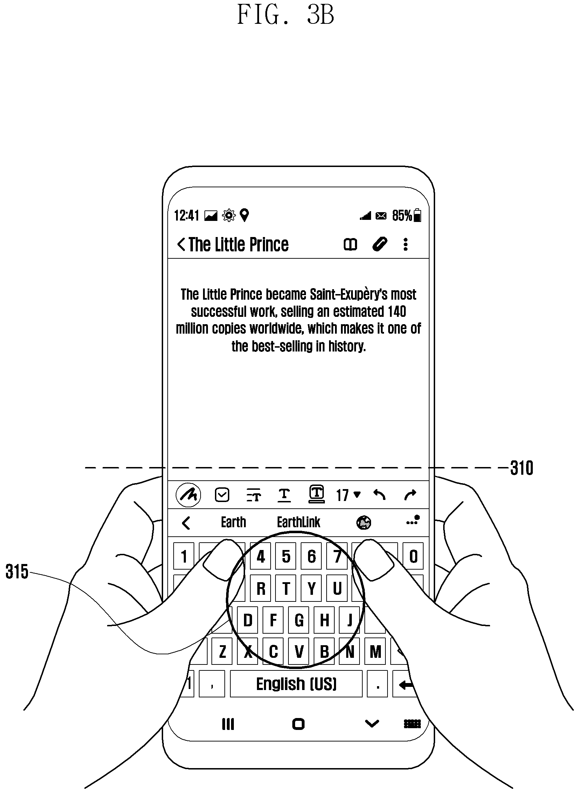

FIG. 3A and FIG. 3B illustrate a form in which an electronic device is supported by a hand according to a position where a screen keyboard is displayed when the electronic device is held, and illustrate a portion to which force is applied to press a button on a screen.

In FIG. 3A, the center of gravity of the electronic device may be positioned on a center line 300 on a display. The screen keyboard (e.g., the screen keyboard 220 of FIG. 2) may be displayed lower based on the center line 300. As an area occupied by an application execution screen increases, the position of the screen keyboard 220 may be moved relatively downward, based on a y-axis. The y-axis may be disposed in a vertical direction, based on the center of the electronic device, and an axial direction will be described in detail with reference to FIG. 5.

As the position of the screen keyboard 220 moves downward, the position of a portion 305 to which force is applied when inputting a button on the keyboard may also move distant from the center of gravity.

FIG. 3B illustrates a situation in which the electronic device is held with both hands.

In FIG. 3B, similar to FIG. 3A, the center of gravity of the electronic device may be positioned on a center line 310 on the display. The screen keyboard (e.g., screen keyboard 220 of FIG. 2) may be displayed lower based on the center line 310. As an area occupied by an application execution screen increases, the position of the screen keyboard 220 may be moved relatively downward, based on the y-axis.

As the position of the screen keyboard 220 moves downward, the position of a portion 315 to which force is applied when inputting a button on the keyboard may also move distant from the center of gravity.

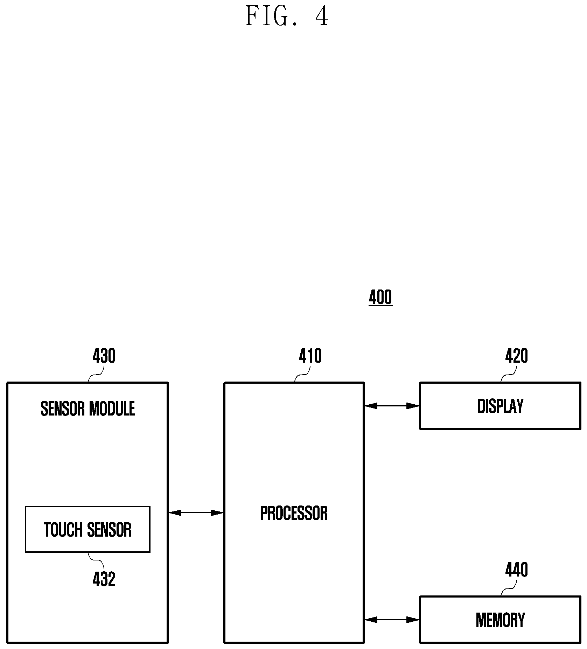

FIG. 4 illustrates a block diagram of an electronic device according to various embodiments.

Referring to FIG. 4, the electronic device 400 may include a display 420, a sensor module 430, a processor 410, and/or a memory 440, and some of the illustrated components may be omitted or substituted in various embodiments. The electronic device 400 may further include at least some of the components and/or functions of the electronic device 101 of FIG. 1. At least some of the components of the electronic device 400 illustrated (or not illustrated) may be operatively, functionally, and/or electrically connected to each other.

According to various embodiments, the display 420 may display various images according to control of the processor 410. The display 420 may be configured as any one of a liquid crystal display (LCD), a light-emitting diode (LED) display, a micro LED display, a quantum dot (QD) display, or an organic light-emitting diode (OLED)) display, but is not limited thereto. The display 420 may be formed as a touchscreen that detects a touch and/or proximity touch (or hovering) input using a body part (e.g., a finger) of a user or an input device (e.g., a stylus pen). The display 420 may include at least some of the components and/or functions of the display module 160 of FIG. 1.

According to various embodiments, the display 420 may be at least partially flexible, and may also be configured as a foldable display, a rollable display, a slidable display, or a stretchable display.

According to various embodiments, a touch sensor 432 may include at least some of the components and/or functions of the sensor module 176 of FIG. 1, and may receive an input of the user on the display 420. The touch sensor 432 may be configured as any one of a conductivity sensor, a capacitive touch sensor, a resistive touch sensor, a surface touch sensor, a projected captivated (PCAP) touch sensor, or a surface acoustic wave touch sensor, but is not limited thereto. The display 420 of the electronic device 400 may include one or more touch sensors 432.

According to various embodiments, the memory 440 may include a volatile memory (e.g., the volatile memory 132 of FIG. 1) and a non-volatile memory (e.g., the non-volatile memory 134 of FIG. 1), and may temporarily or permanently store various data. The memory 440 may include at least some of the components and/or functions of the memory 130 of FIG. 1, and may store the program 140 of FIG. 1.

According to various embodiments, the memory 440 may store various instructions executable by the processor 410. The instructions may include control commands, such as arithmetic and logical operation, data movement, or input/output commands, recognizable by the processor 410.

According to various embodiments, the processor 410 may be a component operatively, functionally, and/or electrically connected to each component (e.g., the display 420, the sensor module 430, and the memory 440) of the electronic device 400 and capable of performing operations or data processing related to control and/or communication of each component. The processor 410 may include at least some of the components and/or functions of the processor 120 of FIG. 1.

According to various embodiments, although there is no restriction on operations and data processing functions that the processor 410 is capable of implementing in the electronic device 400, various embodiments for performing flexible filtering by providing a plurality of filters with different filter values and providing a typing error correction method with a high accuracy when the electronic device 400 corrects a typing error on a keyboard due to a slip will be described hereinafter. The following operations of the processor 410 may be performed by loading the instructions stored in the memory 440.

According to various embodiments, the processor 410 may execute an application for inputting a character and a number into the display 420. For example, the processor 410 may execute a single application for typing, or may execute a first application for performing various functions and also a second application for typing in a text input field in the foreground of the first application. For example, the processor 410 may display the keyboard on the display 420, may display a character or a number on the display 420, based on a user input, and may perform typing by executing the keyboard in a text input field while executing another application.

According to various embodiments, the processor 410 may obtain touch data from the touch sensor 432. The touch data may include various pieces of information about a user input event on the display 420 that occurs when the event occurs. For example, the touch data may include information, such as a first point where a touch of a user starts, a second point where the touch ends, the duration of the touch, or the size of a touch area. When a slip occurs, the processor 410 may determine whether to filter the slip, based on the touch data.

According to various embodiments, the processor 410 may obtain user characteristic information from the sensor module 430. The user characteristic information may include information about various factors that affect performance of a typing input. For example, the user characteristic information may include information about factors, such as the user's behavioral pattern, gait, dotting, typing error, touch area, key size spacing, finger size and shape, phone slope, holding hand, and/or input speed. The processor 410 may determine whether to filter the slip with further reference to the user characteristic information.

According to various embodiments, the processor 410 may accumulate personal touch data and the user characteristic information about the user, and store the same in the memory 440. The touch data generated by the touch sensor 432 and the user characteristic information generated by the sensor module 430 may include information about a tendency of the user of the electronic device 400 to touch the keyboard. The processor 410 may analyze the touch data and the user characteristic information, and may store the same in the memory 440 to be used later for typing error correction.

According to various embodiments, the processor 410 may generate a personalization algorithm by using the stored personal touch data, the user characteristic information, and/or a deep learning algorithm. The processor 410 may learn a factor that affects text input performance by using an artificial intelligence model, and the artificial intelligence model may be generated through machine learning. According to an embodiment, this learning may be performed in the electronic device 400 where the artificial intelligence model is performed, or may be performed through a separate server. The learning algorithm may include, for example, at least one of supervised learning, unsupervised learning, semi-supervised learning, and reinforcement learning, but is not limited thereto.

According to various embodiments, the artificial intelligence model may include a plurality of artificial neural network layers. An artificial neural network may include a deep neural network, a convolutional neural network (CNN), a recurrent neural network (RNN), a restricted Boltzmann machine (RBM), deep a belief network (DBN), a bidirectional recurrent deep neural network (BRDNN), a deep Q-network, or a combination of two or more thereof, but is not limited thereto. The artificial intelligence model may additionally or alternatively include a software structure in addition to a hardware structure.

FIG. 5 illustrates a reference line for detecting a situation in which an electronic device shakes and the direction of movement of the electronic device.

Referring to FIG. 5, the electronic device (e.g., the electronic device 400 of FIG. 4) may detect shaking of the electronic device 400 by using a sensor (e.g., the sensor module 430 of FIG. 4), and may express the degree of the shaking as a numerical value. The shaking of the electronic device 400 may be classified into various types depending on an axial direction.

Referring to FIG. 5, an x-axis 510 may refer to a line in a horizontal direction 512 based on a display (e.g., the display 420 in FIG. 4). The x-axis may refer to an imaginary line extending left and right when a user faces the display.

A y-axis 520 may refer to a line in a vertical direction 522 based on the display 420. The y-axis 520 is an imaginary line extending up and down when the user faces the display.

A z-axis 530 may refer to a line in a direction 532 vertically passing through the display 420.

According to an embodiment, the sensor 430 may detect the movement of the electronic device 400 shaking left and right along the x-axis 510. The sensor 430 may detect the movement of the electronic device 400 shaking up and down along the y-axis 520. The sensor 430 may detect the movement of the electronic device 400 shaking back and forth along the z-axis 530.

According to an embodiment, the sensor 430 may include an acceleration sensor and/or a gyro sensor. The sensor 430 may measure the respective values of movement elements or the degree of complex movement of two or more thereof, thereby determining the overall movement direction and movement degree of the electronic device 400. A processor (e.g., the processor 410 of FIG. 4) may receive and analyze data about shaking of the electronic device 400 at regular intervals, and may determine whether there is an abnormality in a state of holding the electronic device 400.

According to an embodiment, the processor 410 may determine that there is an abnormality in the state of holding the electronic device 400, based on satisfaction of a specified condition. The specified condition may include an occasion in which shaking of the electronic device 400 exceeds a preset level.

According to an embodiment, the processor 410 may detect shaking of the electronic device 400 by using at least one of the gyro sensor, the acceleration sensor, a magnetic sensor, and a camera.

According to an embodiment, the processor 410 may determine the degree of shaking of the electronic device 400 by using the magnetic sensor. The magnetic sensor may measure the magnetic field of the Earth or the effect of an electromagnetic field generated from a power line adjacent to the electronic device 400. Since the electromagnetic field represents a fixed value, the processor 410 may determine that there is shaking of the electronic device 400 when a variation in a value measured by the magnetic sensor exceeds a specified level.

The magnetic sensor may communicate with the processor 410 via I2C in a state of being mounted on the electronic device 400. The magnetic sensor may return raw data measured at each time, based on a request of the processor 410. The processor 410 may convert data received from the magnetic sensor, thereby using the data for determining the degree of shaking of the electronic device 400. The processor 410 may perform axis conversion on the raw data, and/or may correct an effect caused by an electromagnetic field inside the electronic device 400.

The processor 410 may convert the data received from the magnetic sensor to obtain a usable correction value. The correction value may include, for example, a geomagnetic value in microteslas (uT). The processor 410 may measure a correction value for each axis (e.g., the x-, y-, and z-axes), and may measure the degree of bias in one of a + direction or a - direction based on 0. The processor 410 may determine an axis with the greatest degree of bias, based on each axis. The processor 410 may determine the degree of shaking of the electronic device 400, based on the axis with the greatest degree of bias.

According to an embodiment, the processor 410 may detect the degree of the shaking according to a user input by each button on a screen keyboard. For example, in a qwerty keyboard, 1, q, a, and z may be displayed on the left. Based on the x-axis 512 of the electronic device 400, '1' may be displayed in the relatively closest position, and 'z' may be displayed in the relatively farthest position. Thus, the shaking may be measured to be relatively greater when the user applies a touch input on 'z' than when the user applies a touch input on '1'. Therefore, the processor 410 may not determine the shaking, based on one fixed value, but may determine which button on the keyboard is pressed, based on a position to which a user input is applied and apply a different reference value depending on the button.

A button (e.g., '1') displayed in a position relatively close to the center of the electronic device 400 has relatively little shaking, and thus a relatively low numerical reference for determining that there is an abnormality in the holding state may be configured for the button. However, a button (e.g., 'z') displayed in a position relatively distant from the center of the electronic device 400 has relatively great shaking, and thus a relatively high numerical reference for determining that there is an abnormality in the holding state may be configured for the button. In addition, the degree of shaking of a button in the same position may vary due to different holding postures or pressing forces depending on users. The processor 410 may record the degree of shaking in the user's usual screen keyboard input situation and may calculate the average, thereby applying different criteria to the users. For example, a strong man may press the screen keyboard with high strength, and thus the degree to which the electronic device 400 shakes may be relatively large. However, a relatively weak woman may press the screen keyboard with low strength, and thus the degree to which the electronic device 400 shakes may be relatively low. These examples are only for illustration, and the degree to which the electronic device 400 shakes in input on the screen keyboard may vary depending on the users.

According to an embodiment, the processor 410 may perform photographing using the camera, and may determine the degree of shaking of the electronic device 400, based on the image quality or shaking of a captured image. The processor 410 may maintain shutter speed at a constant level when capturing an image in order to determine shaking of the electronic device 400 according to whether the image is blurred. The processor 410 may also maintain focal length and the amount of light at a constant level when capturing an image.

The processor 410 may require preconfiguration to identify the degree to which the electronic device 400 shakes by using the camera. The processor 410 may perform a process in which a camera device adjusts a focusing device according to the distance to a subject to discover and configure an optimal value. In a situation of using the camera to detect shaking of the electronic device 400, the processor 410 may stop an automatic focal length adjustment function, and may fix the focus at a certain position within a configurable range. The processor 410 may stop the automatic focal length adjustment function, thereby identifying whether a captured image is blurred due to shaking of the electronic device 400 or the captured image is blurred due to an error in focal length configuration.

In the situation of using the camera to detect shaking of the electronic device 400, the processor 410 may fix the value of an aperture to a constant value. The degree of blurring of a captured image of the subject may vary depending on the aperture value. In a situation where the value of the aperture is relatively low, the degree of blurring of an image captured by the camera may be relatively high. The processor 410 may configure the aperture to a relatively high value among configurable aperture values. For example, the processor 410 may configure the value of the aperture to a level of F/11 within a whole configurable range from F/1.8 to F/16. This example is only for illustration, and a specific aperture value may vary depending on configuration. When the amount of light is too low, the image may be dark, thus making it difficult to determine whether the subject is blurred. Therefore, the processor 410 may configure the value of the aperture to a medium value.

In the situation of using the camera to detect shaking of the electronic device 400, the processor 410 may maintain the shutter speed to be constant. As the shutter speed is relatively low (e.g., 1/100 seconds), a captured image may be displayed blurred. However, as the shutter speed is relatively high (e.g., 1/8000 seconds), a blurring effect of an image may not appear in most situations. The processor 410 may photograph the subject by fixing the shutter speed to a medium value (e.g., 1/500 seconds), and may determine the degree of shaking.

In the situation of using the camera to detect shaking of the electronic device 400, the processor 410 may maintain an International Organization for Standard (ISO) value at a constant value. For example, with the value of the aperture configured to a relatively low value and the shutter speed configured to a relatively low value, a relatively high ISO value may need to be configured. When the amount of light is too low and the shape of an object in an image is too dark, it may be difficult to determine a shaking situation. In this case, for compensation, the ISO value may be configured to a relatively high value (e.g., ISO 1600). The ISO value is only an example, and may vary depending on configuration.

The processor 410 may appropriately configure various factors (e.g., the shutter speed, the amount of light, and the focal length) to determine the degree of shaking of the electronic device 400 through the camera device. The processor 410 may continuously obtain images through the camera device for a certain period of time while arbitrary content is written through the screen keyboard. The processor 410 may calculate and store contrast values for the obtained images. The contrast values may be used to determine an optimal focus state during the operation of an autofocus (AF) function in a mirrorless camera or a smartphone camera. The processor 410 may obtain contrast values of different images by configuring the focusing device of the camera to different values. The processor 410 may compare the contrast values, and may determine a range including the highest value as an appropriate focus range. The processor 410 may calculate the contrast value of an image in a method of identifying the changing level of RGB values of each pixel. When out of focus, RGB values may change relatively gently and gradually. When in focus, RGB values may change rapidly on the boundary of an object. The processor 410 may convert RGB color information into a frequency domain to use the same in a process of calculating RGB values.

The processor 410 may periodically obtain images by using the camera and may calculate contrast values of the images while using the screen keyboard. The processor 410 may compare a relatively high contrast value with a contrast value of an image captured in another section, thereby determining the degree of shaking of the electronic device 400.

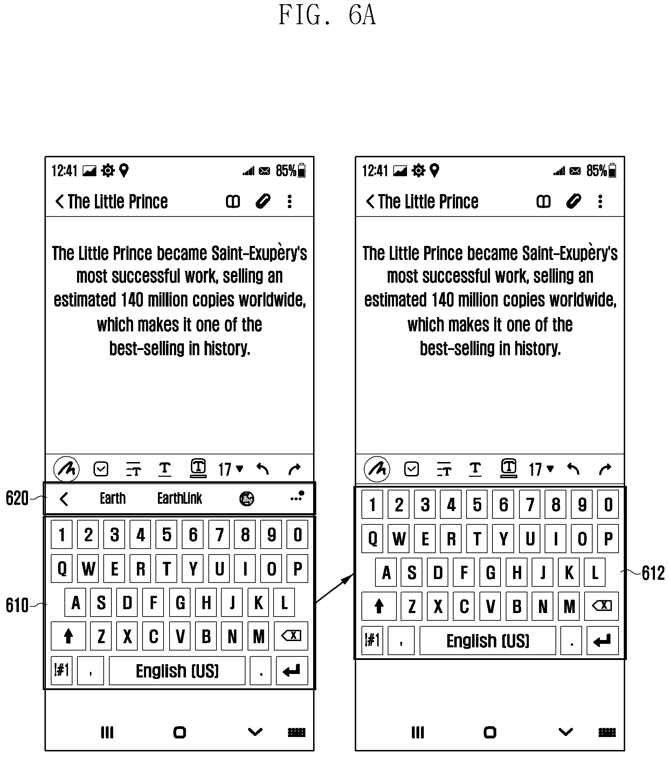

FIG. 6A illustrates an example of adjusting the position and area of a screen keyboard when an abnormality in a state of holding an electronic device is detected according to various embodiments.

Referring to FIG. 6A, a processor (e.g., the processor 410 of FIG. 4) may adjust the position and/or area of the screen keyboard, based on detecting of an abnormality in the state of holding the electronic device (e.g., the electronic device 400 of FIG. 4) when displaying the screen keyboard.

For example, the processor 410 may provide a convenient mode for a user to manipulate the electronic device 400 with one hand. Alternatively, the processor 410 may change the screen keyboard into a separate window to superpose the window on an application execution screen.

Referring to FIG. 6A, the screen keyboard may include a word display unit 620 configured to automatically complete and display a word based on user input data and a key input unit 610 configured to display a general key.

The processor 410 may delete the word display unit 620 and move a key input unit 612 upwards along the y-axis, based on detecting of an abnormality in the state of holding the electronic device 400. The processor 410 may display the key input unit 612 in an area occupied by the word display unit 620, thereby moving the position of the key input unit 612 upwards. In this case, a point where the user applies a touch input may be moved upwards along the y-axis according to the position of the key input unit 612. That is, the processor 410 may change the position and shape of the key input unit 612, thereby controlling the point where the user applies the touch input to be positioned relatively close to the center of gravity. The state of holding the electronic device 400 may be stable as the point where the user applies the touch input is positioned relatively close to the center of gravity. The processor 410 may change the position and shape of the key input unit 612, thereby reducing shaking of the electronic device 400, reducing typing error rate, and increasing the text input speed of the user.

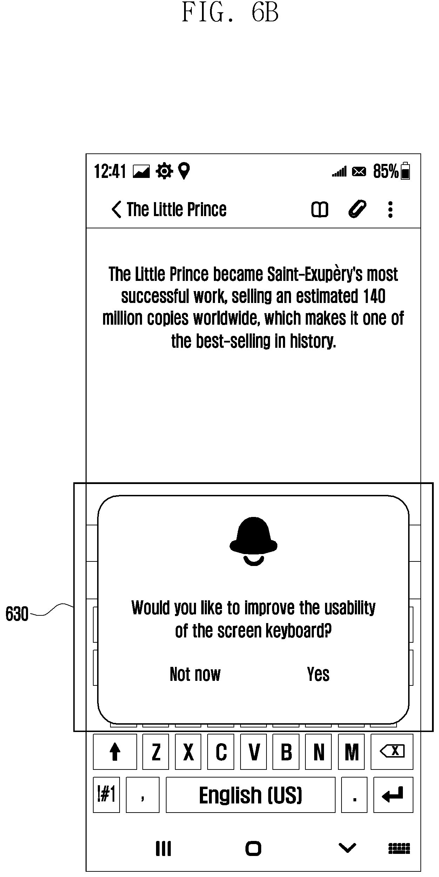

FIG. 6B illustrates an example of displaying a notification of the position and area of a screen keyboard when an abnormality in a state of holding an electronic device is detected.

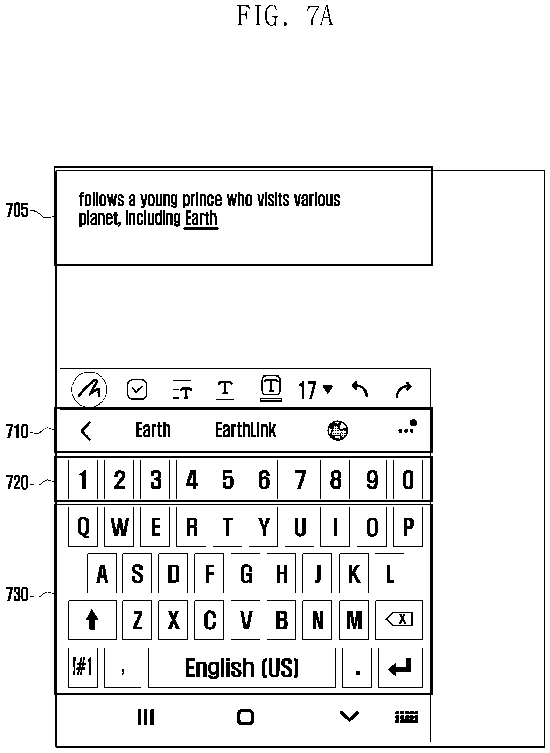

The processor 410 may display a notification 630 of the position and area of the screen keyboard when an abnormality is detected in the state of holding the electronic device 400. The processor 410 may change the position and area of the screen keyboard, based on a user input with respect to the notification 630, as illustrated in FIG. 6A, or in other forms. The other forms of the screen keyboard will be described in detail with reference to FIG. 7A to FIG. 7C. The processor 410 may not change but maintain the position and area of the screen keyboard, based on the user input with respect to the notification 630.

The processor 410 may notify the user that the state of holding the electronic device 400 or a state of manipulating the screen keyboard is unstable by using the notification 630. The processor 410 may propose changing the layout of the keyboard when the holding state or the state of manipulating the screen keyboard is unstable, thereby improving user experience.

FIG. 7A illustrates the configuration of a screen keyboard on an electronic device according to various embodiments.

The screen keyboard may include a first portion 710 in which a recommended word or emoticon is displayed, a second portion 720 in which a number is displayed, and a third portion 730 in which a character is displayed.

The first portion 710 may automatically complete a word based on input data from a user, or may display an emoticon corresponding to the word. For example, in a situation where 'eart' is input in the first portion 710, a processor (e.g., the processor 410 of FIG. 4) may display words including 'eart' (e.g., 'earth' or 'earthquake'). Further, the processor 410 may display an emoticon corresponding to the shape of the Earth, based on inputting of 'earth'. This example is only for illustration, and an autocompleted word is not limited thereto. When there is no emoticon stored in a memory (e.g., the memory 130 of FIG. 1), an emoticon corresponding to an input word may not be presented in the first portion 710. A number, such as 1, 2, 3, ..., is displayed in the second portion 720.

The third portion 730 displays a keyboard in a qwerty type. The following description will be made based on the keyboard in the qwerty type. However, the layout of the screen keyboard is not limited to the qwerty type, and may vary depending on a user's configuration. Preferably, the screen keyboard includes the second portion 720 and the third portion 730, and the first portion 710 may be added as optional.

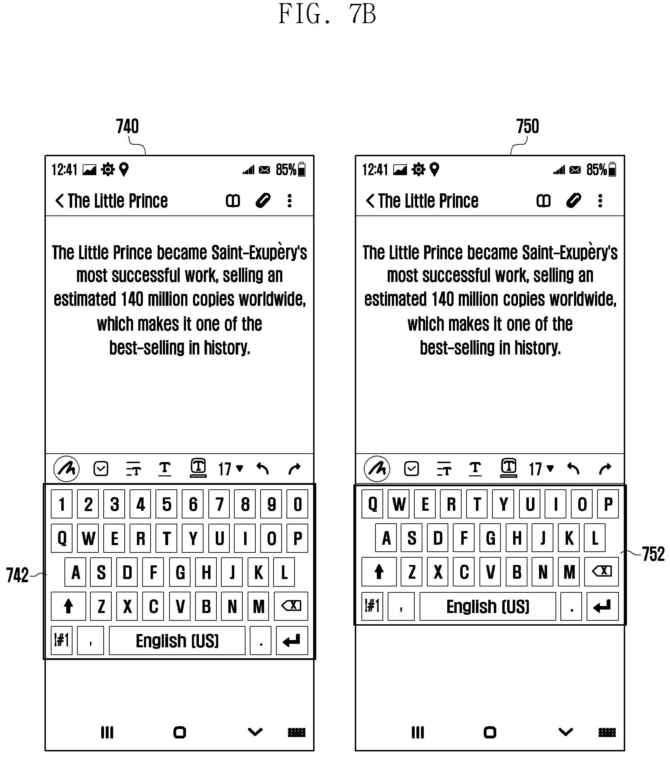

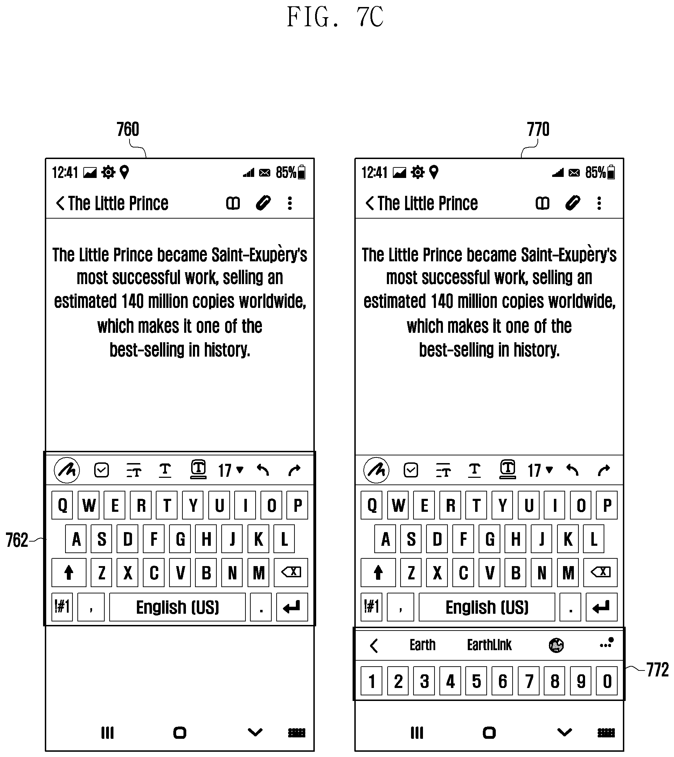

FIG. 7B and FIG. 7C illustrate an example of differently displaying a screen keyboard by changing the position and area of each component of the screen keyboard when an abnormality in a state of holding an electronic device is detected according to various embodiments.

Referring to FIG. 7B, view 740 shows that only the second portion 720 and the third portion 730 are displayed on the screen keyboard with the first portion 710 deleted. Referring to view 750, the processor 410 may display only the third portion 730 with the second portion 720 deleted.

Compared to the position of the screen keyboard 742 in view 740, the position of the screen keyboard 752 may be displayed relatively upwards along the y-axis in view 750. Regarding the position of the displayed screen keyboard, both the top and bottom of the screen keyboard may be moved more upwards than in view 740.

FIG. 7B illustrates an example in which the first portion 710 and/or the second portion 720 are deleted. Whether the first portion 710 and/or the second portion 720 are deleted may depend on the frequency of the user's usual use. The processor 410 may collect data about the frequency of the user's use by a software operation related to a sensor (e.g., the sensor module 430 of FIG. 4). The processor 410 may convert a position in which a user input is applied into a coordinate value, and may determine a portion on the screen keyboard in which the user input is applied among the first portion 710, the second portion 720, and the third portion 730. The processor 410 may analyze the collected data, thereby determining different frequencies of use of the first portion 710, the second portion 720, and the third portion 730 by users. For example, in view 740, the processor 410 may display the second portion 720, and may delete the first portion 710. However, when the frequency of use of the first portion 710 exceeds a specified level, the processor 410 may display the first portion 710, and may delete the second portion 720 unlike in view 740. This example is only for illustration, and a portion to be deleted may vary depending on each user. Further, the type of the screen keyboard may also vary depending on each user.

According to an embodiment, a screen keyboard in a preset type may be automatically determined by the processor 410, based on the user's screen keyboard input pattern and data, or may be determined based on whether to display the first portion 710, the second portion 720, and the third portion 730 and a user input for a display position and area.

According to an embodiment, the processor 410 may analyze data about a screen keyboard usage pattern, and may move the first portion 710 and the second portion 720 to be displayed in a position below the third portion 730 when the frequency of use of the first portion 710 and the second portion 720 exceeds a specified level. When the frequency of use of the first portion 710 and the second portion 720 is less than the specified level, the processor 410 may not display the first portion 710 and the second portion 720.

Referring to FIG. 7C, in view 760, the processor 410 may delete both the first portion 710 and the second portion 720, and may display only the third portion 730 (view 762). In this case, a button (e.g., q, w, e, and r) in the third portion 730 is positioned relatively up, and thus the state of holding the electronic device 400 may be stable. In addition, a portion to which force is applied when the user inputs a touch is relatively close to the center of gravity of the electronic device 400, thus reducing shaking, reducing typing error rate, and increasing the text input speed of the user.

In view 770, the processor 410 may change the layout so that the first portion 710 and the second portion 720 are positioned relatively below the third portion 730 (view 772). Although view 770 shows that the second portion 720 is displayed to be disposed relatively below the first portion 710, the position of the portion may vary depending on the user's frequency of use. For example, when the frequency of use of the first portion 710 is relatively higher than that of the second portion 720, the processor 410 may display the first portion 710 in which the recommended word is displayed to be relatively above the second portion 720 in which the number is displayed.

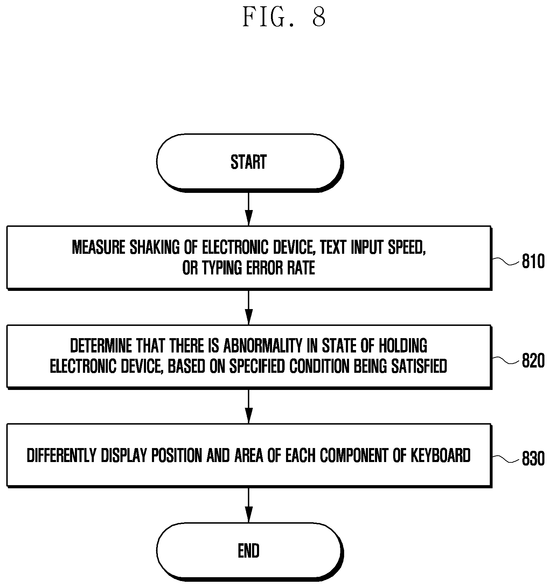

FIG. 8 illustrates a flowchart illustrating a screen keyboard display method of an electronic device according to various embodiments.

Operations described with reference to FIG. 8 may be implemented based on instructions that may be stored in a computer recording medium or a memory (e.g., the memory 130 of FIG. 1). The illustrated method may be executed by the electronic device (e.g., the electronic device 400 of FIG. 4) described above with reference to FIG. 1 to FIG. 7C, and technical features described above will be omitted below. The order of the operations of FIG. 8 may be changed, some of the operations may be omitted, and some of the operations may be performed simultaneously.

In operation 810, a processor (e.g., the processor 410 of FIG. 4) may measure shaking of the electronic device, text input speed, or typing error rate.

In operation 820, the processor 410 may determine that there is an abnormality in a state of holding the electronic device 400, based on satisfaction of a specified condition. The specified condition may include, for example, an occasion in which shaking of the electronic device 400 exceeds a preset level.

According to an embodiment, the processor 410 may detect shaking of the electronic device 400 by using at least one of a gyro sensor, an acceleration sensor, a magnetic sensor, and a camera.

According to an embodiment, the processor 410 may detect an input on a screen keyboard, and may determine that there is an abnormality in the state of holding the electronic device, based on typing error rate exceeding a specified level for a configured time.

According to an embodiment, the processor 410 may determine typing error rate, based on the frequency of inputting a specified key on the screen keyboard. The specified key may include a backspace or delete key. The backspace or delete key may be a key used to erase an input. When the frequency of use of the backspace or delete key increases, the processor 410 may determine that the frequency of a user correcting a typing mistake increases. When the frequency of use of the backspace or delete key exceeds a preset level, the processor 410 may determine that there is an abnormality in the state of holding the electronic device 400.

According to an embodiment, the processor 410 may recognize text with respect to a user input, and may perform a spell check function. The processor 410 may perform the spell check function to determine a typing error in the user input, and may determine the rate of typing errors. When the rate of typing errors exceeds a specified level, the processor 410 may determine that the holding state of the user is unstable. The rate of typing errors may be calculated as the ratio of the number of misspelled characters to the total number of characters input by the user.

The specified condition may include, for example, a text input speed less than a preset level. The text input speed may be determined differently for each user. The text input speed may be difficult to determine with only one measurement. The processor 410 may calculate an average value by accumulating user data about text input for a specified period, and may determine a reference text input speed for each user, based on the average value.

In operation 830, the processor 410 may differently display the position and area of each component of the keyboard, based on determining that there is the abnormality in the state of holding the electronic device 400. Each component of the keyboard has been described with reference to FIG. 7A. Each component of the keyboard may include, for example, a first portion (e.g., the first portion 710 of FIG. 7A) in which a recommended word or emoticon is displayed, a second portion (e.g., the second portion 720 of FIG. 7A) in which a number is displayed, and a third portion (e.g., the third portion 730 of FIG. 7A) in which a character is displayed.

According to an embodiment, when determining that there is the abnormality in the state of holding the electronic device 400, the processor 410 may delete at least one of the first portion 710 in which the recommended word or emoticon is displayed and the second portion 720 in which a number key is displayed, and may relatively increase the area of the third portion 730. The processor 410 may move the position of the displayed third portion 730 upwards on a display (e.g., the display 420 of FIG. 4), along the y-axis.

According to an embodiment, when determining that there is the abnormality in the state of holding the electronic device 400, the processor 410 may move at least one of the first portion 710 and the second portion 720 to be below the third portion 730.

According to an embodiment, when determining that there is the abnormality in the state of holding the electronic device 400, the processor 410 may delete at least one of the first portion 710 and the second portion 720, and may reduce the y-axis width of the third portion 730, thereby moving the position of the displayed third portion 730 upwards on the display 420, along the y-axis.

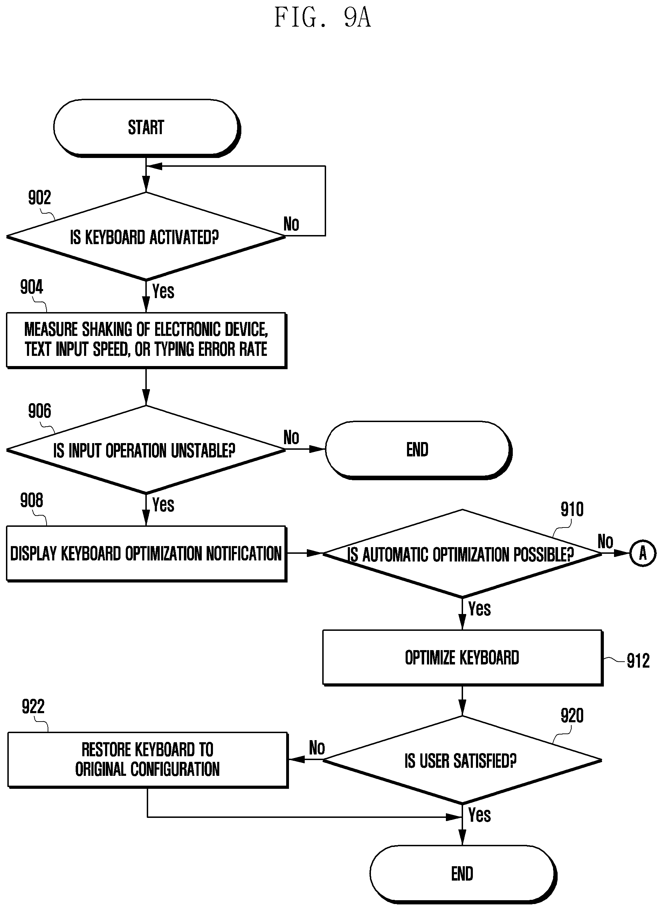

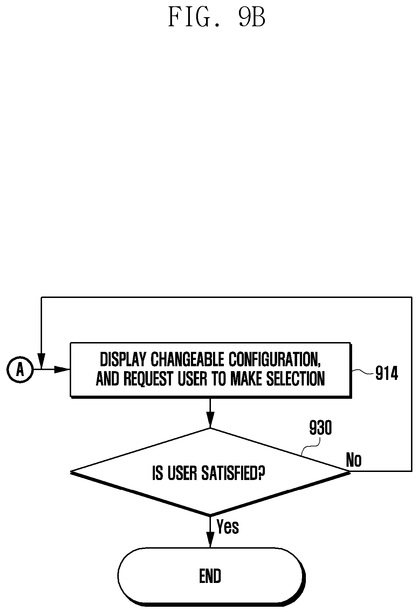

FIG. 9A and FIG. 9B illustrate flowcharts illustrating each operation of a screen keyboard display method of an electronic device according to various embodiments.

Operations described with reference to FIG. 9A and FIG. 9B may be implemented based on instructions that may be stored in a computer recording medium or a memory (e.g., the memory 130 of FIG. 1). The illustrated method may be executed by the electronic device (e.g., the electronic device 400 of FIG. 4) described above with reference to FIG. 1 to FIG. 7C, and technical features described above will be omitted below. The order of the operations of FIG. 9A and FIG. 9B may be changed, some of the operations may be omitted, and some of the operations may be performed simultaneously.

In operation 902, a processor (e.g., the processor 410 of FIG. 4) may determine whether a screen keyboard is activated. The screen keyboard may be displayed on a display to perform user input. The screen keyboard may include a first portion (e.g., the first portion 710 of FIG. 7A) in which a recommended word or emoticon is displayed, a second portion (e.g., the second portion 720 of FIG. 7A) in which a number is displayed, and a third portion (e.g., the third portion 730 of FIG. 7A) in which a character is displayed.

When the screen keyboard is not activated (No in operation 902), the processor 410 may wait until the screen keyboard is activated by repeating operation 902.

In operation 904, the processor 410 may measure shaking of the electronic device, text input speed, or typing error rate, based on the screen keyboard being activated (Yes in operation 902). The processor 410 may determine that there is an abnormality in a state of holding the electronic device 400, based on satisfaction of a specified condition.

The specified condition may include, for example, an occasion in which shaking of the electronic device 400 exceeds a preset level. The specified conditions may include, for example, a text input speed less than a preset level.

In operation 906, the processor 410 may determine whether a user input operation on the electronic device 400 is unstable. Alternatively, the processor 410 may determine whether there is an abnormality in the state of holding the electronic device 400. The processor 410 may determine whether there is an abnormality in the state of holding the electronic device 400, based on any one of the shaking of the electronic device, the text input speed, or the typing error rate.

According to an embodiment, the processor 410 may detect shaking of the electronic device 400 by using at least one of a gyro sensor, an acceleration sensor, a magnetic sensor, and a camera.

According to an embodiment, the processor 410 may detect an input on the screen keyboard, and may determine that there is an abnormality in the state of holding the electronic device, based on the typing error rate exceeding a specified level for a configured time. When there is no abnormality in the state of holding the electronic device 400, the processor 410 may terminate the operation (No in operation 906).

In operation 908, the processor 410 may display a keyboard optimization notification (e.g., the notification 630 of FIG. 6B), based on the abnormality in the state of holding the electronic device 400 (Yes in operation 906). The notification has been described with reference to FIG. 6B.

According to an embodiment, the processor 410 may display a notification 630 of adjusting the position and area of the screen keyboard when the abnormality in the state of holding the electronic device 400 is detected. The processor 410 may notify a user that the state of holding the electronic device 400 or a state of manipulating the screen keyboard is unstable display the notification 630 by using the notification 630. The processor 410 may propose changing the layout of the keyboard when the holding state or the state of manipulating the screen keyboard is unstable, thereby improving user experience.

In operation 910, the processor 410 may determine whether to automatically optimize the type of the screen keyboard.

According to an embodiment, a screen keyboard in a preset type may be automatically determined by the processor 410, based on the user's screen keyboard input pattern and data, or may be determined based on whether to display the first portion (e.g., the first portion 710 of FIG. 7A), the second portion (e.g., the second portion 720 of FIG. 7A) in which the number is displayed, and the third portion (e.g., the third portion 730 of FIG. 7A) in which the character is displayed and a user input for a display position and area.

According to an embodiment, the processor 410 may analyze data about a screen keyboard usage pattern, and may move the first portion 710 and the second portion 720 to be displayed in a position below the third portion 730 when the frequency of use of the first portion 710 and the second portion 720 exceeds a specified level. When the frequency of use of the first portion 710 and the second portion 720 is less than the specified level, the processor 410 may not display the first portion 710 and the second portion 720.

The processor 410 may optimize the keyboard optimization in operation 912, based on the user's screen keyboard input pattern and data being sufficient to automatically form an optimized screen keyboard pattern (Yes in operation 910).

In operation 920, the processor 410 may optimize the keyboard, and may display a notification of asking whether the user is satisfied with keyboard optimization. When receiving a response indicating that the user is satisfied. (Yes in operation 920), the processor 410 may terminate the operation. When receiving a response indicating that the user is not satisfied (No in operation 920), the processor 410 may restore the configuration of the screen keyboard to the original type in operation 922. Alternatively, when receiving the response indicating that the user is not satisfied, the processor 410 may display a changeable configuration, and may request the user to make a selection.

When it is difficult to automatically form the optimized screen keyboard pattern because the user's screen keyboard input pattern and data are not sufficient (No in operation 910), the processor 410 may display a changeable configuration, and may request the user to make a selection (operation 914).

In operation 930, the processor 410 may optimize the keyboard, based on the user's selection, and may display a notification of asking whether the user is satisfied with keyboard optimization. When receiving a response indicating that the user is satisfied. (Yes in operation 930), the processor 410 may terminate the operation.

When receiving a response indicating that the user is not satisfied (No in operation 930), the processor 410 may display a changeable configuration and request the user to make a selection again in operation 914.

The embodiments disclosed in the specification and drawings are only intended to provide specific examples for easily describing technical content according to the embodiments of the disclosure and for assisting understanding of the embodiments of the disclosure, and are not intended to limit the scope of the embodiments of the disclosure. Therefore, it should be interpreted that the scope of an embodiment of the disclosure includes all changes or modifications derived based on the technical idea of the embodiment of the disclosure in addition to the embodiments disclosed herein.

An electronic device may include a display to display a screen keyboard, a sensor, a processor, and a memory configured to store instructions, wherein the screen keyboard may include a first portion in which a character is displayed and a second portion in which a number is displayed. The instructions, when executed by the processor, may cause the electronic device to determine that there is an abnormality in a state of holding the electronic device, based on satisfaction of a specified condition, and differently determine positions and areas of the first portion and the second portion to be displayed on the display.

A method in which an electronic device displays a screen keyboard may include determining that there is an abnormality in a state of holding the electronic device, based on satisfaction of a specified condition and differently determining positions and areas of a first portion, in which a character is displayed, and a second portion, in which a number is displayed, to be displayed on the display.

According to an embodiment, the screen keyboard may further include a third portion in which a recommended word or an emoticon is displayed, the memory may store instructions configured to, when executed, cause the processor to determine positions and areas of the first portion, the second portion, and the third portion displayed on the display, based on the specified condition, and the specified condition may include an occasion in which shaking of the electronic device exceeds a preset level.

According to an embodiment, the memory may store instructions configured to, when executed, cause the processor to detect the shaking of the electronic device by using at least one of a gyro sensor, an acceleration sensor, a magnetic sensor, or a camera.

According to an embodiment, the memory may store instructions configured to, when executed, cause the processor to detect an input on the screen keyboard, and determine that there is the abnormality in the state of holding the electronic device, based on typing error rate exceeding a specified level for a configured time.

According to an embodiment, the memory may store instructions configured to, when executed, cause the processor to determine that the typing error rate exceeds the specified level, based on frequency at which a specified key is input on the screen keyboard exceeding a specified level, and the specified key may include a backspace key or a delete key.

According to an embodiment, the specified condition may include a text input speed less than a preset level, and the text input speed may be determined to vary depending on each user, and may be determined as an average value obtained by accumulating user data about text input for a specified period.

According to an embodiment, the memory may store instructions to delete at least a portion of the second portion, based on satisfaction of the specified condition, and to relatively increase the area of the first portion and to move the position of the first portion to be displayed upwards based on a y-axis on the display.

According to an embodiment, the memory may store instructions to move at least a portion of the second portion to be below the first portion, based on satisfaction of the specified condition, and to move the position of the first portion to be displayed upwards based on a y-axis on the display.

According to an embodiment, the memory may store instructions to delete at least a portion of the second portion, based on satisfaction of the specified condition, and to reduce a y-axis width of the first portion and to move the position of the first portion to be displayed upwards based on a y-axis on the display.

According to an embodiment, the memory may store instructions configured to, when executed, cause the processor to move the second portion to be below the first portion when frequency of use of the second portion exceeds a specified level by analyzing data about a usage pattern of the screen keyboard, and not to display the second portion on the display when the frequency of use of the second portion is less than the specified level.

According to an embodiment, the memory may store instructions configured to, when executed, cause the processor to configure the positions and areas of the first portion and the second portion to be displayed on the display, based on a user selection, display a notification indicating that a state of manipulating the screen keyboard is unstable, based on determining that there is the abnormality in the state of holding the electronic device, display a notification of asking about a change of the screen keyboard to a new type, and display the positions and areas of the first portion and the second portion to be displayed on the display as configured in advance by the user, based on a user selection indicating the change of the screen keyboard to the new type.

A recording medium storing instructions which cause the computer to carry out a screen keyboard display method. At least one processor in an electronic device, according to the present invention, may function like the computer to perform the instructions. Therefore, the electronic device may include the at least one processor and a memory configured to store the instructions. A screen keyboard displayed in a display of the electronic device may include a first portion in which a character is displayed and a second portion in which a number is displayed. The instructions, when executed by the processor, may cause the electronic device to determine that there is an abnormality in a state of holding the electronic device, based on satisfaction of a specified condition, and differently determine positions and areas of the first portion and the second portion to be displayed on the display.

## Claims

1. An electronic device comprising:
a display configured to display a screen keyboard;
wherein the screen keyboard comprises a first portion in which a character is displayed and a second portion in which a number is displayed,
at least one processor; and
memory storing instructions that, when executed by the at least one processor, cause the electronic device to:
determine that there is an abnormality in a state of holding the electronic device, based on satisfaction of a specified condition; and
differently determine positions and areas of the first portion and the second portion to be displayed on the display.

2. The electronic device of claim 1, wherein the screen keyboard further comprises a third portion in which a recommended word or an emoticon is displayed,
wherein the instructions, when executed by the at least one processor, cause the electronic device to determine positions and areas of the first portion, the second portion, and the third portion displayed on the display, based on the specified condition, and
wherein the specified condition comprises an occasion in which shaking of the electronic device exceeds a preset level.

3. The electronic device of claim 2, wherein the instructions, when executed by the at least one processor, cause the electronic device to detect the shaking of the electronic device by using at least one of a gyro sensor, an acceleration sensor, a magnetic sensor, and a camera.

4. The electronic device of claim 1, wherein the instructions, when executed by the at least one processor, cause the electronic device to:
detect an input on the screen keyboard; and
determine that there is the abnormality in the state of holding the electronic device, based on typing error rate exceeding a specified level for a configured time.

5. The electronic device of claim 4, wherein the instructions, when executed by the at least one processor, cause the electronic device to determine that the typing error rate exceeds the specified level, based on frequency at which a specified key is input on the screen keyboard exceeding a specified level, and
wherein the specified key comprises a backspace key or a delete key.

6. The electronic device of claim 1, wherein the specified condition comprises a text input speed less than a preset level, and
wherein the text input speed is determined to vary depending on each user, and is determined as an average value obtained by accumulating user data about text input for a specified period.

7. The electronic device of claim 1, wherein the instructions, when executed by the at least one processor, cause the electronic device to:
delete at least a portion of the second portion, based on satisfaction of the specified condition, and to relatively increase the area of the first portion and to move the position of the first portion to be displayed upwards based on a y-axis (520) disposed in a vertical direction based on a center of the electronic device on the display.

8. The electronic device of claim 1, wherein the instructions, when executed by the at least one processor, cause the electronic device to:
move at least a portion of the second portion to be below the first portion, based on satisfaction of the specified condition, and to move the position of the first portion to be displayed upwards based on a y-axis (520) disposed in a vertical direction based on a center of the electronic device on the display.

9. The electronic device of claim 1, wherein the instructions, when executed by the at least one processor, cause the electronic device to:
delete at least a portion of the second portion, based on satisfaction of the specified condition, and to reduce a y-axis width of the first portion and to move the position of the first portion to be displayed upwards based on a y-axis (520) on the display, wherein the y-axis (520) is disposed in a vertical direction based on a center of the electronic device.

10. The electronic device of claim 1, wherein the instructions, when executed by the at least one processor, cause the electronic device to:
move the second portion to be below the first portion when frequency of use of the second portion exceeds a specified level by analyzing data about a usage pattern of the screen keyboard; and
not to display the second portion on the display when the frequency of use of the second portion is less than the specified level.

11. The electronic device of claim 1, wherein the instructions, when executed by the at least one processor, cause the electronic device to:
configure the positions and areas of the first portion and the second portion to be displayed on the display, based on a user selection;
display a notification indicating that a state of manipulating the screen keyboard is unstable, based on determining that there is the abnormality in the state of holding the electronic device;
display a notification of asking about a change of the screen keyboard to a new type; and
display the positions and areas of the first portion and the second portion to be displayed on the display as configured in advance by the user, based on a user selection indicating the change of the screen keyboard to the new type.

12. The electronic device of claim 1, wherein the instructions, when executed by the at least one processor, cause the electronic device to:
display a notification indicating that a state of manipulating the screen keyboard is unstable, based on determining that there is the abnormality in the state of holding the electronic device;
display a notification of asking about a change of the screen keyboard to a new type; and
differently display the positions and the areas of the first portion and the second portion to be displayed on the display in consideration of a pattern of shaking and frequency at which the user uses the first portion and the second portion, based on a user selection.

13. A method in which an electronic device displays a screen keyboard, the method comprising:
determining that there is an abnormality in a state of holding the electronic device, based on satisfaction of a specified condition; and
differently determining positions and areas of a first portion in which a character is displayed, and a second portion in which a number is displayed, to be displayed on the display.

14. The method of claim 13, wherein the screen keyboard further comprises a third portion in which a recommended word or an emoticon is displayed,
wherein the method further comprises determining positions and areas of the first portion, the second portion, and the third portion displayed on the display, based on the specified condition, and
wherein the specified condition comprises an occasion in which shaking of the electronic device exceeds a preset level.

15. The method of claim 14, further comprising detecting, by a processor, the shaking of the electronic device by using at least one of a gyro sensor, an acceleration sensor, a magnetic sensor, and a camera.
